## Europäisches Patentamt

## European Patent Office

## Office européen des brevets

(11) Veröffentlichungsnummer: **0 021 068**
**B1**

(12) **EUROPÄISCHE PATENTSCHRIFT**

(45) Veröffentlichungstag der Patentschrift:
**10.11.82**

(21) Anmeldenummer: **80102925.7**

(22) Anmeldetag: **24.05.80**

(51) Int. Cl.³: **H 04 B 7/24, H 04 B 7/26, H 04 Q 7/00**

(54) **Funknetz mit Zellenstruktur.**

(30) Priorität: **07.06.79 DE 2923088**

(43) Veröffentlichungstag der Anmeldung:
**07.01.81 Patentblatt 81/1**

(45) Bekanntmachung des Hinweises auf die Patenterteilung:
**10.11.82 Patentblatt 82/45**

(84) Benannte Vertragsstaaten:
**AT CH DE FR GB LI NL SE**

(56) Entgegenhaltungen:
**DE-A-2 365 043**
**DE-A-2 806 178**
**DE-B-2 423 603**

(73) Patentinhaber: **TE KA DE Felten & Guilleaume Fernmeldeanlagen GmbH,**
**Thurn-und-Taxis-Strasse 10 Postfach 4943,**
**D-8500 Nürnberg 1 (DE)**

(72) Erfinder: **Braak, Dirk Johan, Dipl.-Ing., Adlerstrasse 23,**
**D-8501 Heroldsberg (DE)**

(74) Vertreter: **Peuckert, Hermann, Philips Kommunikations Industrie AG Patente und Lizenzen .**
**Postfach 3538 Thurn-und-Taxis-Strasse 10,**
**D-8500 Nürnberg 10 (DE)**

ACTORUM AG

# Funknetz mit Zellenstruktur

Die Erfindung betrifft ein Funknetz mit Netzzellen, bestehend aus sechseckigen Kleinzellen, für die Frequenzgruppen sowie Sende- und Empfangsantennen vorgesehen sind und die ein Wabenmuster bilden, wobei eine Kleinzelle, die zentrale Kleinzelle, in deren Mittelpunkt ihre Sende- und Empfangsantenne steht, von einem inneren Ring aus sechs weiteren Kleinzellen unmittelbar umgeben ist und diese sechs Kleinzellen von einem oder mehreren äuseren Ringen aus zwölf, achtzehn usw. Kleinzellen unmittelbar umschlossen werden.

Bevorzugt werden mobile automatische Telefoniesysteme als Funknetze mit Zellenstruktur ausgebildet.

Ein derartiges Funknetz ist in The Bell System Technical Journal, Jan. 1979, auf den Seiten 15-41 in dem Aufsatz «The Cellular Concept» beschrieben.

Dieses Funknetz besteht aus regelmässigen Sechsecken, den Kleinzellen, die zu einem Wabenmuster zusammengesetzt sind. Jeder Kleinzelle sind eine feste Funkstation sowie eine Reihe von Kanälen zugeordnet, auf denen sich der Funkverkehr zwischen der festen Funkstation und beweglichen Funkstationen, z.B. mit Autotelefonen ausgerüstete Fahrzeuge, abspielen soll. Als Standorte für die Sende- und Empfangsantennen der festen Funkstationen sind entweder die Mittelpunkte der sechseckigen Kleinzellen oder je drei ihrer Eckpunkte vorgesehen. Antennen im Mittelpunkt einer Kleinzelle haben ein Rundstrahlungsdiagramm, sie strahlen und empfangen also nach allen Richtungen mit der gleichen Feldstärke. Linien gleicher Feldstärke sind demnach konzentrische Kreise mit dem Antennenstandort als gemeinsamen Mittelpunkt.

Die drei Sendeantennen an den Eckpunkten sind Richtantennen, die jeweils mit einem Winkel von 120° zum Zellenmittelpunkt hin strahlen. Die Empfangsantennen, an den gleichen Punkten aufgestellt, haben selbstverständlich die gleiche Richtcharakteristik.

Die weiteren Betrachtungen beziehen sich auf das bekannte Funknetz mit den Zellenmittelpunkten als Antennenstandorte, da bei der vorliegenden Erfindung die Antennen für eine Kleinzelle an einem Ort aufgestellt sind und nicht wie eben geschildert auf drei Eckpunkte einer Kleinzelle verteilt sind.

Grössere Schwierigkeiten treten z.B. in Grossstädten auf, wo sich auf engem Raum viele bewegliche Funkstationen drängen, da einerseits viele Kanäle nötig sind, um eine hohe Teilnehmerkapazität zu erzielen, andererseits aber nur in beschränktem Umfang Frequenzen und damit Kanäle zur Verfügung stehen. Indem man anstatt grösserer Netzzellen kleine Zellen wählt, kann man zwar solchen Kleinzellen, die genügend weit voneinander entfernt sind, die gleichen Frequenzgruppen zuteilen, so dass durch die Wiederholung von Frequenzgruppen der gleiche Effekt erzielt wird wie bei der Verwendung von mehr aber verschiedenen Frequenzen, jedoch treten dadurch gleichzeitig unerwünschte Gleichkanalstörungen auf. Auf Seite 22 des erwähnten Aufsatzes ist angegeben, wie Anzahl N der Frequenzgruppen, Zellenradius R und Abstand D zweier benachbarter Kleinzellen mit gleicher Frequenzgruppe voneinander abhängen: $D/R = \sqrt{3N}$.

Das Abstandsverhältnis D/R ist ein Mass für das Feldstärkeverhältnis zweier benachbarter Kleinzellen gleicher Frequenzgruppe, gemessen in dem Punkt auf dem Rand einer Kleinzelle, der die geringste Entfernung zum Mittelpunkt und somit zu den Antennen der benachbarten Kleinzelle hat. Eine bewegliche Funkstation wird dort von der Sendeantenne der zugehörenden Kleinzelle mit der geringsten Feldstärke empfangen, dagegen von der benachbarten Kleinzelle mit der stärksten Feldstärke gestört werden. In entgegengesetzter Richtung wird die bewegliche Funkstation den Empfang in der festen Funkstation der benachbarten Kleinzelle am stärksten stören, wenn sie von diesem kritischen Punkt aus sendet.

Aus den Seiten 30 und 31 der genannten Literaturstelle geht hervor, dass einerseits zur Erhöhung der Teilnehmerkapazität der Abstand D zwischen Kleinzellen mit gleichen Frequenzgruppen möglichst klein sein soll, dass aber andererseits D möglichst gross gewählt werden soll, um Gleichkanalstörungen gering zu halten. Sollen beide Forderungen ausreichend erfüllt werden, so ist ein Kompromiss nötig, dessen Spielraum allerdings durch die Beziehung $D/R = \sqrt{3N}$ eingeschränkt wird.

Aufgabe der Erfindung ist es deshalb, bei vorgegebener Anzahl der Frequenzgruppen wesentlich geringere Gleichkanalstörungen zu erzielen, als es nach dem Stand der Technik möglich ist.

Die Erfindung löst diese Aufgabe bei einer Netzzelle für ein Funknetz, bestehend aus sechseckigen Kleinzellen, für die Frequenzgruppen wiederholt verwendet werden, für die Sende- und Empfangsantennen vorgesehen sind und die ein Wabenmuster bilden, indem eine Kleinzelle, die zentrale Kleinzelle, in deren Mittelpunkt ihre Sende- und Empfangsantenne steht, von einem inneren Ring aus sechs weiteren Kleinzellen umschlossen wird und diese sechs Kleinzellen wiederum von einem oder mehreren äusseren Ringen aus zwölf, achtzehn usw. Kleinzellen umschlossen werden, dadurch, dass die Sende- und Empfangsantennen der umschliessenden sechseckigen Kleinzellen an denjenigen Schnittpunkten ihrer Umkreise mit den vom Mittelpunkt der zentralen Kleinzelle zu ihren Mittelpunkten führenden Verbindungsgeraden stehen, die den geringsten Abstand vom Mittelpunkt der zentralen Kleinzelle haben und dass diese Sende- und Empfangsantennen mit einem angenähert cos²-förmigen Strahlungsdiagramm in Richtung der Verbindungsgeraden nach aussen gerichtet sind. Antennen mit einem exakt cos²-förmigen Strahlungsdiagramm lassen sich praktisch nicht realisieren, obwohl dies das günstigste Strahlungsdiagramm wäre. Auch störende Neben- und Rückkeulen sind nicht ganz zu vermeiden, wohl aber können sie genügend klein gemacht werden, so dass die Erfindung nicht in ihrer Funktion beeinträchtigt wird.

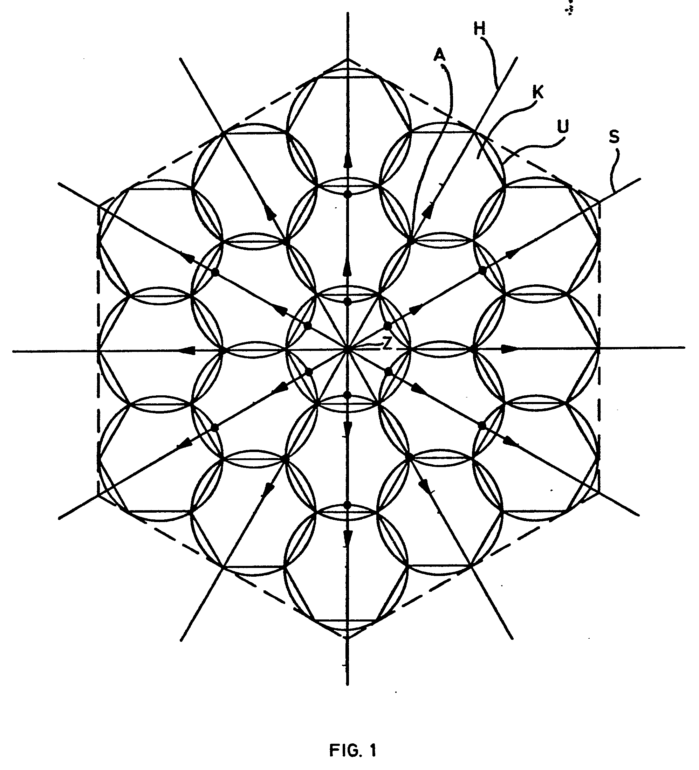

Die Figur 1 zeigt ein vorteilhaftes Ausführungsbeispiel einer Netzzelle mit neunzehn sechseckigen Kleinzellen K, ihren Umkreisen U, den Standorten und Hauptstrahlrichtungen der Antennen A sowie mit den Hauptdiagonalen H und Seitenhalbierenden S als Verbindungsgeraden und mit dem Mittelpunkt Z der zentralen Kleinzelle.

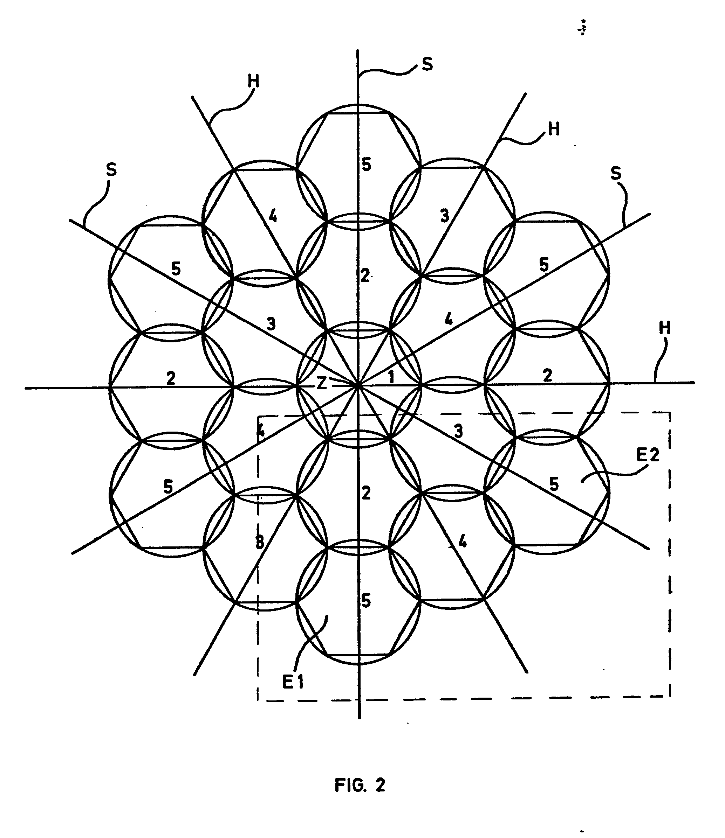

Eine weitere vorteilhafte Ausgestaltung der Erfindung sieht fünf verschiedene Frequenzgruppen für die Netzzelle vor, die, wie in Fig. 2 gezeigt, auf die einzelnen Kleinzellen verteilt sind. Eine Frequenzgruppe 1 ist der mittleren Kleinzelle zugeordnet, den sie unmittelbar umschliessenden sechs Kleinzellen sind drei weitere Frequenzgruppen 2, 3, 4 symmetrisch zum Zellenmittelpunkt Z zugeordnet. Eine fünfte Frequenzgruppe 5 ist den Kleinzellen an den Eckpunkten zugeordnet, während die drei Frequenzgruppen 2, 3 und 4, die bereits den die zentrale Kleinzelle umschliessenden Kleinzellen zugeordnet sind, auch den Kleinzellen zwischen den Ecken zugeordnet werden. Dabei sind die zweimal verwendeten Frequenzgruppen 2, 3 und 4 symmetrisch zum Mittelpunkt Z der zentralen Kleinzelle so verteilt, dass die Mittelpunkte von Kleinzellen gleicher Frequenzgruppen auf Diagonalen H und Seitenhalbierenden S der zentralen Kleinzelle liegen, die einen rechten Winkel einschliessen.

Anhand dieses Ausführungsbeispiels mit fünf verschiedenen Frequenzgruppen sollen die Vorteile der Erfindung — geringere Gleichkanalstörungen bei gleichzeitig weniger Frequenzgruppen — gegenüber dem bekannten Funknetz aufgezeigt werden.

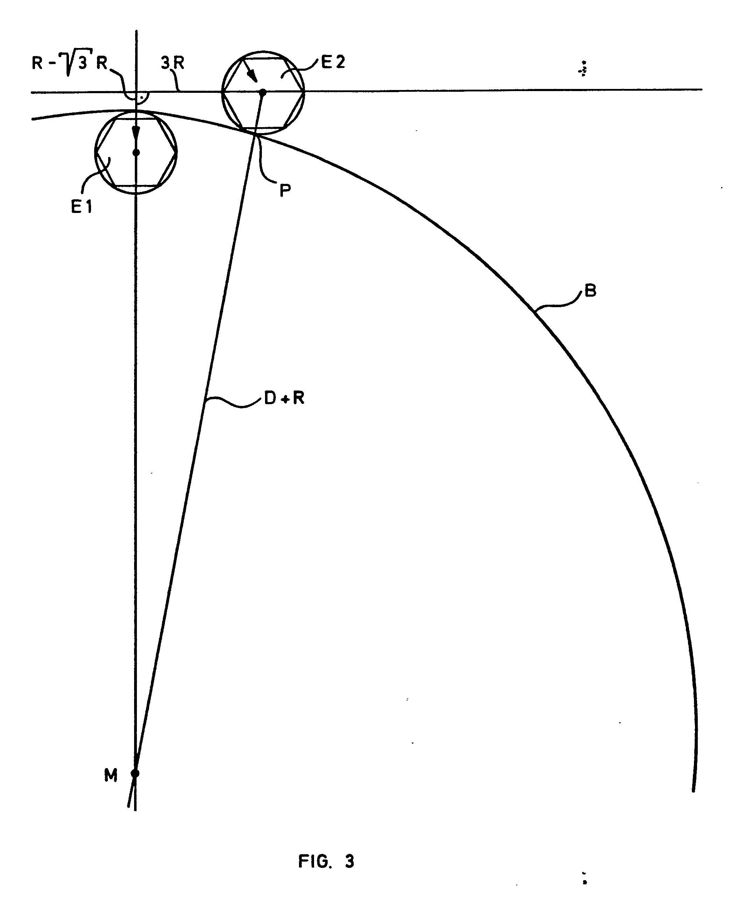

Die Fig. 3 zeigt den in Fig. 2 angedeuteten Ausschnitt mit zwei benachbarten Eckzellen E1 und E2 der gleichen Frequenzgruppe 5. Wie aus Fig. 2 zu erkennen ist, treten die grösstmöglichen Gleichkanalstörungen bei zwei benachbarten Eckzellen auf, da die Hauptstrahlrichtungen ihrer Antennen einen geringeren Winkel einschliessen als es bei allen anderen benachbarten Kleinzellen gleicher Frequenzgruppe der Fall ist.

Die eingezeichneten Umkreise der einzelnen als Sechsecke dargestellten Kleinzellen sind annähernd Linien gleicher Feldstärke, denn die Sende und Empfangsantennen der festen Funkstationen haben mit Ausnahme derjenigen der zentralen Kleinzelle ein cos²-förmiges Strahlungsdiagramm.

Eine bewegliche Funkstation, die z.B. auf dem Umkreis der Eckzelle E2, einer Linie annähernd gleicher Feldstärke, fährt, wird die zugehörige feste Funkstation überall auf dem Kreis mit der gleichen Feldstärke empfangen. Ebenso wird die bewegliche Funkstation von allen Punkten des Umkreises aus von der festen Funkstation mit nahezu der gleichen Feldstärke empfangen.

Die grössten Gleichkanalstörungen sind nun immer dort auf dem Umkreis, dem Rand einer Kleinzelle also, zu erwarten, wo die grösste Feldstärke der benachbarten Kleinzelle gleicher Frequenzgruppe gemessen wird. Es ist der Punkt P, in dem sich der Umkreis der Kleinzelle E2 und ein weiterer Kreis B berühren, der durch den Antennenstandort der Kleinzelle E1 geht und dessen Mittelpunkt M auf dem Hauptstrahl der Antenne von Kleinzelle E1 liegt. Aus Symmetriegründen genügt es, für diesen einen Punkt P das Feldstärkeverhältnis zu bestimmen, denn es ist das ungünstigste, das überhaupt vorkommen kann.

Eine bewegliche Funkstation im Punkt P wird von der entsprechenden festen Funkstation in der Kleinzelle E2 mit der kleinstmöglichen Feldstärke empfangen, dagegen von der festen Funkstation der Kleinzelle E1 mit der grösstmöglichen Feldstärke gestört werden. In entgegengesetzter Senderichtung stört diese bewegliche Funkstation in der Kleinzelle E1 den Empfang einer anderen beweglichen Funkstation, die sich auf dem Rand, dem Umkreis, der Kleinzelle E1 bewegt, am stärksten.

Das Feldstärkeverhältnis lässt sich wegen der umgekehrten Proportionalität zur zweiten Potenz der Abstände leicht berechnen: Im Punkt P ist die Feldstärke von der Kleinzelle E2 umgekehrt proportional zur zweiten Potenz des doppelten Zellenradius 2R, die Feldstärke von Kleinzelle E1 umgekehrt proportional zur zweiten Potenz des doppelten Radius 2D des berührenden Kreises B. Das Feldstärkeverhältnis ist dann $D^2/R^2$ und leicht mittels der eingezeichneten Hilfslinien zu berechnen, wenn man zusätzlich die wabenförmige Struktur der Netzzelle beachtet.

Aus der Gleichung

$$(D + R)^2 = (3R)^2 + (D - R + \sqrt{3}R)^2$$

folgt: D/R = 15,9.

Ein Vergleich mit dem bekannten Funknetz verdeutlicht die Vorteile der Erfindung: Um ein solches Feldstärkeverhältnis zu erzielen, wären nach der Beziehung $D/R = \sqrt{3N}$ mindestens

$$N = \frac{D^2}{3R^2} = \frac{15^2}{3} = 75$$

Frequenzgruppen nötig. Die Erfindung kommt dagegen mit nur fünf Frequenzgruppen aus.

Man kann aber z.B. auch auf die Ersparnis an Frequenzen bei der Erfindung vollständig verzichten und statt dessen die Teilnehmerkapazität um den Faktor 15 erhöhen, ohne grössere Gleichkanalstörungen dafür in Kauf nehmen zu müssen. Angenommen jede Frequenzgruppe besteht aus zehn verschiedenen Frequenzen, so werden dem Stand der Technik entsprechend 750 Frequenzen benötigt, die bei der Erfindung allerdings auf nur fünf Gruppen verteilt werden müssen, so dass eine Frequenzgruppe bei der Erfindung 15 x mehr, nämlich 150 Frequenzen, aufweist.

Eine weitere vorteilhafte Ausgestaltung der Erfindung, die im Patentanspruch 4 angegeben ist, besteht darin, sieben Frequenzgruppen in an sich bekannter Weise auf die neunzehn Kleinzellen zu verteilen.

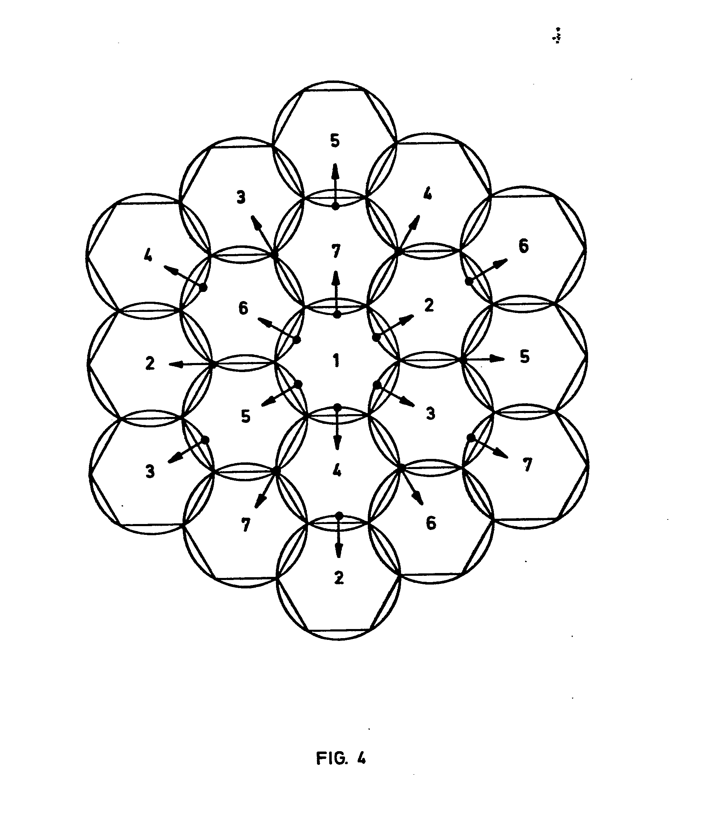

Aus der in Fig. 4 gezeichneten Verteilung der sieben Frequenzgruppen 1, 2, 3, 4, 5, 6 und 7 lässt sich leicht erkennen, dass bei diesem Ausführungsbeispiel der Erfindung theoretisch Gleichkanalstörungen nicht mehr möglich sind.

Eine andere vorteilhafte Ausgestaltung einer Netzzelle ist für Gebiete geeignet, in denen die Teilnehmerdichte von einem Zentrum nach aussen hin abnimmt, wie es z.B. in Grossstädten häufig der Fall ist. Im Zentrum der Stadt werden viele Frequenzen benötigt, dagegen in den Randgebieten nur wenige. Aus diesem Grund kann man am Rand des Stadtgebietes, also am Rand einer Netzzelle, grösseren Flächen die gleichen Frequenzgruppen zuordnen als es im Zentrum möglich wäre. Bei der Erfindung erreicht man dies dadurch, dass bei einem oder mehreren äusseren Ringen jeweils mindestens zwei benachbarten Kleinzellen gleiche Frequenzgruppen zugeordnet sind.

Eines von vielen solch möglicher Ausführungsbeispiele sieht vor, dass bei mindestens zwei äusseren Ringen jeweils mindestens zwei einander entsprechende Kleinzellen, das sind die Kleinzellen an und zwischen den Ecken, gleiche Frequenzgruppen haben.

Anhand einer Netzzelle, bestehend aus siebenunddreissig Kleinzellen, sei diese vorteilhafte Ausgestaltung der Erfindung näher erläutert.

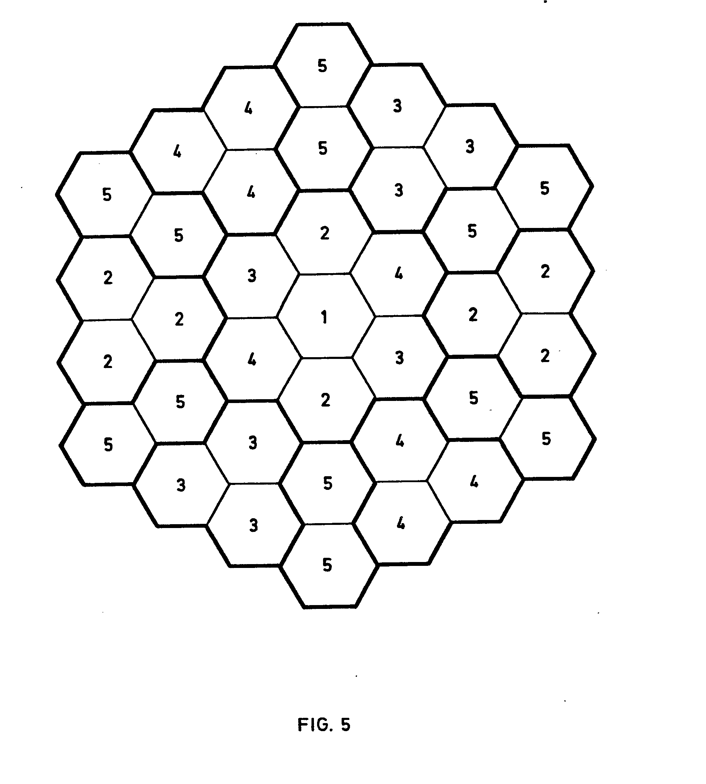

Die zentrale Kleinzelle ist von einem inneren und zwei äusseren Ringen aus Kleinzellen umgeben, für die insgesamt fünf verschiedene Frequenzgruppen vorgesehen sind. Wie in Fig. 5 gezeigt, sind einander entsprechenden Kleinzellen der beiden äusseren Ringe gleiche Frequenzgruppen zugeordnet.

Ferner können für benachbarte Kleinzellen gleicher Frequenzgruppe Vorrichtungen vorgesehen sein, die bewirken, dass ein und dieselbe Frequenz immer nur in einer dieser Kleinzellen verwendet wird. Andere Vorrichtungen sorgen dafür, dass sich der Funkverkehr einer beweglichen Funkstation stets mit der festen Funkstation abspielt, in deren Kleinzelle sich die bewegliche Funkstation tatsächlich aufhält.

Selbstverständlich lassen sich mehrere erfindungsgemässe Netzzellen zu einem beliebig grossen Funknetz zusammensetzen. Von den vielen sich bietenden Möglichkeiten der Frequenzgruppenverteilung seien nur einige besonders vorteilhafte erwähnt.

Unter bestimmten Bedingungen ist z.B. ein Funknetz, das wabenförmig aus Netzzellen nach Anspruch 3 zusammengesetzt ist, denkbar, in dem die fünf den Kleinzellen einer Netzzelle zugeordneten Frequenzgruppen 1, 2, 3, 4 und 5 von Netzzelle zu Netzzelle so vertauscht sind, dass an den Netzzellengrenzen nur Kleinzellen verschiedener Frequenzgruppen aneinanderstossen.

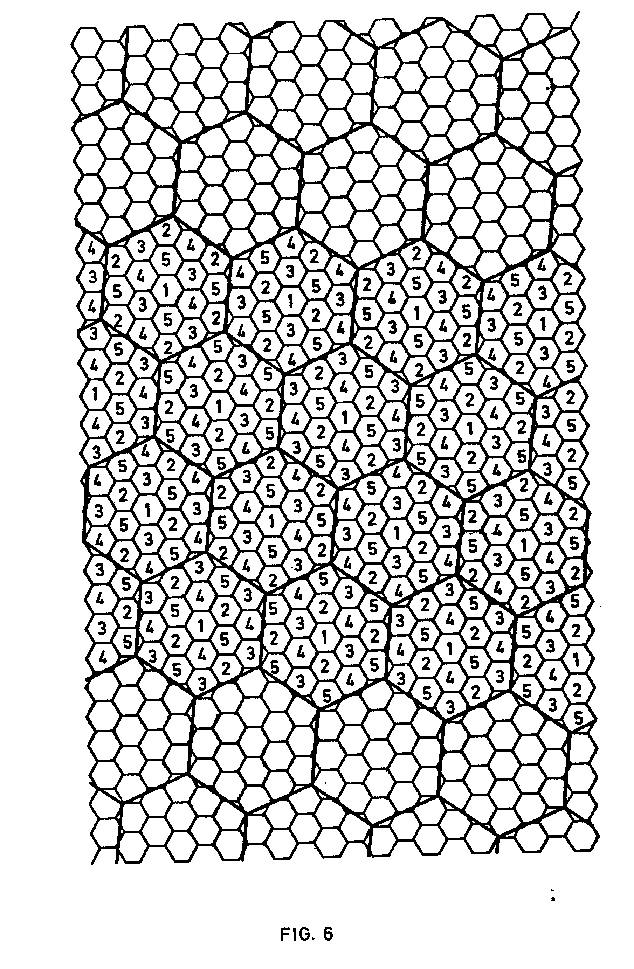

Wie die Fig. 6 zeigt, treten trotz dem Vertauschen der Frequenzgruppen 1, 2, 3, 4 und 5 an den Netzzellengrenzen erheblich Gleichkanalstörungen auf, die aber unter Umständen durch geschicktes Ausnutzen des Geländes, indem z.B. Grösse und Form der Kleinzellen leicht variiert und so der Beschaffenheit des Geländes angepasst werden, genügend kleingehalten werden können.

Die Kleinzellen brauchen keineswegs eine streng geometrisch sechseckige Form aufweisen. Es können ferner auch einige Kleinzellen einfach weggelassen werden. Jedoch wird dies in Gebieten mit hoher Teilnehmerzahl, für die das erfindungsgemässe Funknetz besonders geeignet ist, kaum der Fall sein.

Eine besonders vorteilhafte Ausgestaltung eines Funknetzes, bei dem Gleichkanalstörungen unabhängig von der Formation des Geländes hinreichend klein sind, ist im Patentanspruch 8 angegeben. Das Funknetz ist aus Netzzellen gemäss Anspruch 3 oder 4 wabenförmig zusammengesetzt. Die fünf bzw. sieben Frequenzgruppen einer Netzzelle bilden eine Frequenzobergruppe, von denen vier verschiedene I, II, III und IV für das gesamte System vorgesehen sind.

Die vier Frequenzobergruppen I, II, III, IV mit jeweils fünf verschiedenen Frequenzgruppen sind auf das gesamte Funknetz so verteilt, dass Netzzellen gleicher Frequenzobergruppe nicht aneinander grenzen. Wie der neulich erfolgte Beweis des bekannten Vierfarbenproblems zeigt, gibt es mindestens eine Verteilung bei vier Frequenzobergruppen, die die geforderte Bedingung, dass Netzzellen gleicher Frequenzobergruppe nicht aneinender grenzen, erfüllt.

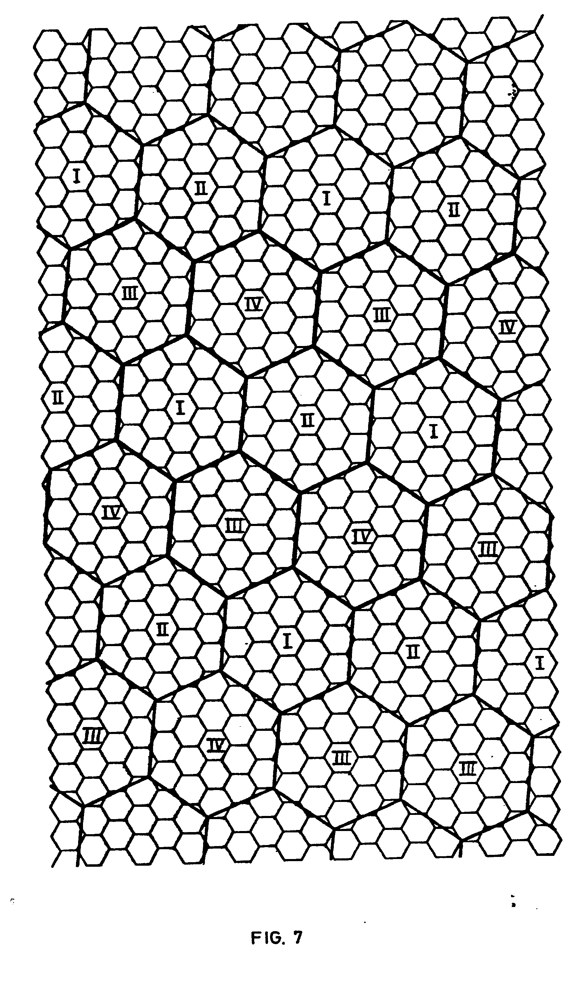

Eine Möglichkeit, die vier Frequenzobergruppen I, II, III, IV unter dieser Bedingung auf das Funknetz zu verteilen, ist im Patentanspruch 9 angegeben und in Fig. 7 gezeigt.

Die Frequenzobergruppen I, II, III und IV sind gleichmässig auf das gesamte Funknetz symmetrisch zu den Mittelpunkten der Netzzellen verteilt.

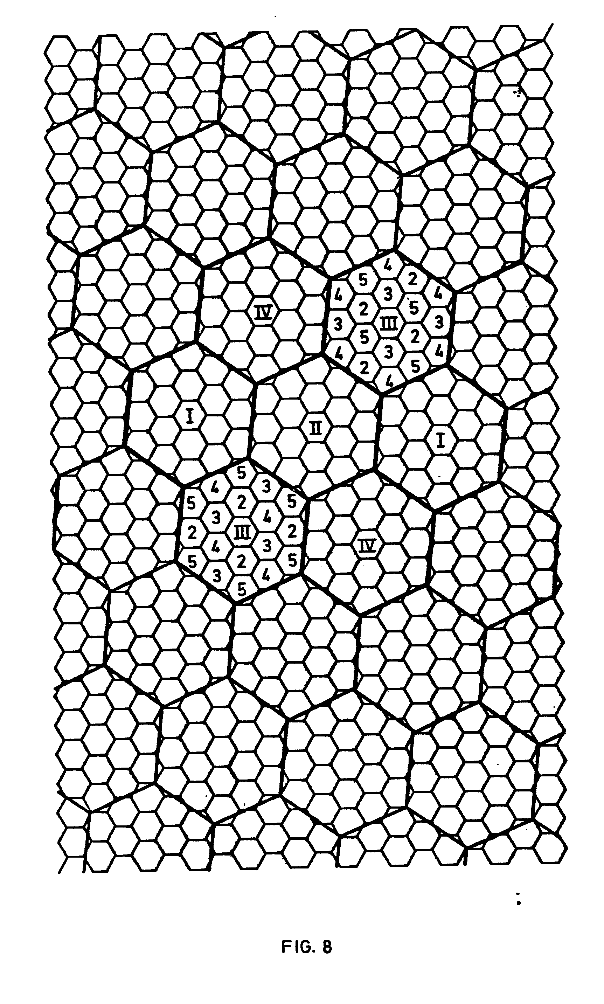

Gleichkanalstörungen lassen sich bei diesem Ausführungsbeispiel dadurch verringern, dass durch Vertauschen der Frequenzgruppen die äusseren Kleinzellen, die sich auf den Seiten von Netzzellen gleicher Frequenzobergruppe gegenüberliegen, keine Frequenzgruppe gemeinsam haben. In Fig. 8 ist die entsprechende Verteilung der Frequenzgruppen für zwei Netzzellen III eingezeichnet. Bei den anderen Netzzellen I, II und IV sind die Frequenzgruppen entsprechend auf die Kleinzellen verteilt.

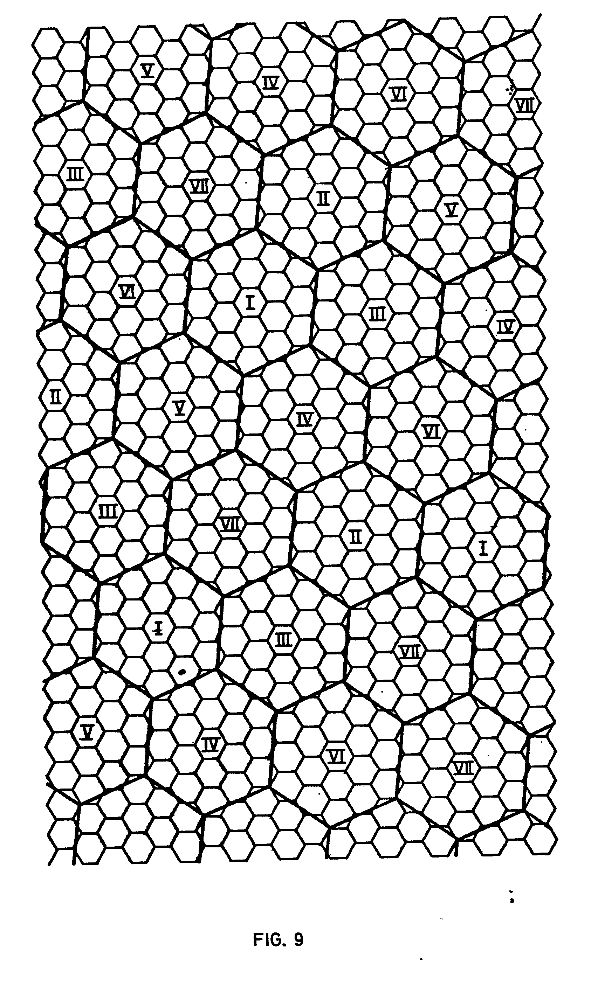

Bei einem weiteren vorteilhaften Ausführungsbeispiel der Erfindung sind für die Netzzellen, entsprechend Anspruch 3 oder 4 mit fünf bzw. sieben Frequenzgruppen, sieben Frequenzobergruppen I, II, III, IV, V, VI und VII vorgesehen, die in an sich bekannter Weise, wie in Fig. 9 gezeigt, auf die Netzzellen verteilt sind.

## Patentansprüche

1. Funknetz mit Netzzellen, bestehend aus sechseckigen Kleinzellen, für die Frequenzgruppen wiederholt verwendet werden, für die Sende- und Empfangsantennen vorgesehen sind und die ein Wabenmuster bilden, indem eine Kleinzelle, die zentrale Kleinzelle, in deren Mittelpunkt ihre Sende- und Empfangsantenne steht, von einem inneren Ring aus sechs weiteren Kleinzellen umschlossen wird und diese sechs Kleinzellen wiederum von einem oder mehreren äusseren Ringen aus zwölf, achtzehn usw. Kleinzellen umschlossen werden, dadurch gekennzeichnet, dass die Sende- und Empfangsantennen aller umschliessenden sechseckigen Kleinzellen an denjenigen Schnittpunkten ihrer Umkreise mit den vom Mittelpunkt der zentralen Kleinzelle zu ihren Mittelpunkten führenden Verbindungsgeraden stehen, die den geringsten Abstand vom Mittelpunkt der zentralen Kleinzelle haben und dass diese Sende- und Empfangsantennen mit einem angenähert cos²-förmigen Strahlungsdiagramm in Richtung der Verbindungsgeraden nach aussen gerichtet sind.

2. Funknetz mit Netzzellen nach Anspruch 1, gekennzeichnet durch neunzehn Kleinzellen.

3. Funknetz mit Netzzellen nach Anspruch 2, dadurch gekennzeichnet, dass der zentralen Kleinzelle eine Frequenzgruppe (1) zugeordnet ist, dass den sie umschliessenden sechs Kleinzellen symmetrisch zum Mittelpunkt drei weitere Frequenzgruppen (2, 3, 4) zugeordnet sind, dass den äusseren Kleinzellen an den Ecken eine fünfte Frequenzgruppe (5) zugeordnet ist und dass die bereits den sechs Kleinzellen, welche die zentrale Kleinzelle unmittelbar umschliessen, zugeordneten Frequenzgruppen (2, 3, 4) bei den Kleinzellen zwischen den Ecken wieder verwendet werden und symmetrisch zum Mittelpunkt (Z) so verteilt sind, dass die Mittelpunkte von Kleinzellen gleicher Frequenzgruppen auf Diagonalen (H) und Seitenhalbierenden (S) der zentralen Kleinzelle liegen, die einen rechten Winkel einschliessen.

4. Funknetz mit Netzzellen nach Anspruch 2, dadurch gekennzeichnet, dass sieben Frequenzgruppen (1, 2, 3, 4, 5, 6, 7) gleichmässig in bekannter Weise auf die zentrale Kleinzelle und die sie unmittelbar umschliessenden sechs Kleinzellen verteilt sind und dass die sechs Frequenzgruppen (2, 3, 4, 5, 6, 7) dieser Kleinzellen bei den äusseren umschliessenden zwölf Kleinzellen wieder verwendet werden.

5. Funknetz mit Netzzellen nach Anspruch 1, dadurch gekennzeichnet, dass bei einem oder mehreren äusseren Ringen mindestens zwei benachbarten Kleinzellen die gleiche Frequenzgruppe zugeordnet ist.

6. Funknetz mit Netzzellen nach Anspruch 5, dadurch gekennzeichnet, dass bei mindestens zwei äusseren Ringen jeweils mindestens zwei einander entsprechende Kleinzellen, das sind die Kleinzellen an und zwischen den Ecken, gleiche Frequenzgruppen zugeordnet sind.

7. Funknetz, aus Netzzellen nach Anspruch 3 ein Wabenmuster bildend, dadurch gekennzeichnet, dass die vier Frequenzgruppen der umschliessenden Kleinzellen von Netzzelle zu Netzzelle so vertauscht sind, dass an den Netzzellengrenzen nur Kleinzellen verschiedener Frequenzgruppen aneinanderstossen.

8. Funknetz, aus Netzzellen nach Anspruch 3 oder 4 ein Wabenmuster bildend, dadurch gekennzeichnet, dass die Frequenzgruppen einer Netzzelle eine Frequenzobergruppe bilden und dass vier verschiedene Frequenzobergruppen (I, II, III, IV) vorgesehen sind, die so auf das gesamte Funknetz verteilt sind, dass Netzzellen gleicher Frequenzobergruppe nicht aneinander grenzen.

9. Funknetz nach Anspruch 8, dadurch gekennzeichnet, dass die vier verschiedenen Frequenzobergruppen (I, II, III, IV) gleichmässig auf die Netzzellen symmetrisch zu ihren Mittelpunkten verteilt sind.

10. Funknetz nach Anspruch 8 oder 9, dadurch gekennzeichnet, dass durch Vertauschen der Frequenzgruppen diejenigen Kleinzellen am Rande von Netzzellen mit gleicher Frequenzobergruppe, die sich gegenüberliegen, keine Frequenzgruppe gemeinsam haben.

11. Funknetz aus Netzzellen nach Anspruch 3 oder 4 ein Wabenmuster bildend, dadurch gekennzeichnet, dass die Frequenzgruppen einer Netzzelle eine Frequenzobergruppe bilden, dass sieben verschiedene Frequenzobergruppen (I, II, III, IV, V, VI, VII) vorgesehen und in an sich bekannter Weise auf die Netzzellen verteilt sind.

## Claims

1. Radio network with network cells, consisting of hexagonal small cells for which groups of frequencies are repeatedly used, for which transmit and receive antennas are provided, and which form a honeycomb pattern where a small cell, the central small cell, in the centre point of which its transmit and receive antenna is located, is surrounded by an inner circle of six further small cells, and where these six small cells are again surrounded by one or several outer rings of twelve, eighteen a.s.o. small cells, characterized in that the transmit and receive antennas of all surrounding hexagonal small cells are located in those points of intersection of their circumcircles with the straight lines of connection originating from the centre point of the central small cell, which have the least distance from the centre point of the central small cell, and that these transmit and receive antennas are oriented to the exterior in direction of the strainght lines of connection with a radiation diagram having an approximated cos² shape.

2. Radio network with network cells as per claim 1, characterized by nineteen small cells.

3. Radio network with network cells as per claim 2, characterized in that a frequency group (1) is allocated to the central small cell, three further frequency groups (2, 3, 4) are allocated to the six small cells surrounding symmetrically the centre point, a fifth frequency group (5) is allocated to the outer small cells at the corners, and that the frequency groups (2, 3, 4) already allocated to the six small cells directly surrounding the central small cell, are again used with the small cells between the corners, and which are distributed symmetrically to the centre point (Z) such that the centre points of small cells with same frequency groups are situated on diagonals (H) and side-bisecting lines (S) of the central small cell, which include a right angle.

4. Radio network with network cells as per claim 2, characterized in that seven frequency groups (1, 2, 3, 4, 5, 6, 7) are equally and in well-known manner distributed to the central small cell and to the six small cells directly surrounding it, and that the six frequency groups (2, 3, 4, 5, 6, 7) of these small cells are again used with the twelve externally surrounding small cells.

5. Radio network with network cells as per claim 1, characterized in that with one or several external rings, the same frequency group is allocated to at least two adjacent small cells.

6. Radio network as per claim 5, characterized in that with at least two external rings, same frequency groups are allocated to at least two small cells corresponding to each other at a time, these are the small cells at and between the corners.

7. Radio network, a honeycomb pattern of network cells forming as per claim 3, characterized in that the four frequency groups of the surrounding small cells are interchanged from network cell to network cell such that only small cells of different frequency groups adjoin each other.

8. Radio network, a honeycomb pattern of network cells forming as per claims 3 or 4, characterized in that the frequency groups of a network cell form a superior frequency group, and that four different superior frequency groups (I, II, III, IV) are provided which are distributed to the entire radio network such that network cells of the same superior frequency group do not adjoin each other.

9. Radio network as per claim 8, characterized in that the four different superior frequency grops (I, II, III, IV) are equally distributed to the network cells, symmetrically to their centre points.

10. Radio network as per claims 8 or 9, characterized in that by interchanging of the frequency groups, those small cells at the border of network cells with same frequency group, which are opposite to each other, do not have a frequency group in common.

11. Radio network, a honeycomb pattern of network cells forming as per claims 3 or 4, characterized in that the frequency groups of a network cell form a superior frequency group, seven different superior frequency groups (I, II, III, IV, V, VI, VII) are provided and distributed to the network cells in well-known manner.

**Revendications**

1. Réseau de radiocommunication avec cellules de réseau formées de petites cellules hexagonales pour lesquelles on utilise à répétition des groupes de fréquence, pour lesquelles sont prévues des antennes d'émission et de réception et qui forment une configuration en nid d'abeille, en ce sens qu'une petite cellule, la petite cellule centrale, au centre de laquelle se trouve son antenne d'émission et de réception, est entourée d'une couronne intérieure de six autres petites cellules et que ces six petites cellules sont à nouveau entourées d'une ou plusieurs couronnes extérieures de douze, dix-huit, etc., petites cellules, caractérisé en ce que les antennes d'émission et de réception de toutes les petites cellules hexagonales entourant la petite cellule centrale se trouvent aux points qui, parmi les points d'intersection de leurs cercles circonscrits avec les droites de jonction menant du centre de la petite cellule centrale à leurs centres, sont à la plus petite distance du centre de la petite cellule centrale, et en ce que ces antennes d'émission et de réception sont dirigées vers l'extérieur, en direction des droites de jonction, avec un diagramme de rayonnement approximativement de forme cos².

2. Réseau de radiocommunication avec cellules de résau selon la revendication 1, caractérisé par dix-neuf petites cellules.

3. Réseau de radiocommunication avec cellules de réseau selon la revendication 2, caractérisé en ce qu'à la petite cellule centrale est affecté un groupe de fréquences (1), en ce qu'aux six petites cellules qui l'entourent sont affectés, symétriquement autour du centre, trois autres groupes de fréquences (2, 3, 4), en ce qu'aux petites cellules extérieures situées aux angles est affecté un cinquième groupe de fréquences (5), et en ce que les groupes de fréquences (2, 3, 4) déjà affectés aux six petites cellules qui entourent directement la petite cellule centrale sont à nouveau utilisés pour les petites cellules situées entre les angles et sont répartis symétriquement autour du centre (Z) de telle sorte que les centres de petites cellules de groupes de fréquences semblables sont situés sur des diagonales (H) et des médianes (S) de la petite cellule centrale qui font entre elles un angle droit.

4. Réseau de radiocommunication avec cellules de réseau selon la revendication 2, caractérisé en ce que sept groupes de fréquences (1, 2, 3, 4, 5, 6, 7) sont répartis uniformément de façon connue sur la petite cellule centrale et les six petites cellules qui l'entourent directement, et en ce que les six groupes de fréquences (2, 3, 4, 5, 6, 7) de ces petites cellules sont à nouveau utilisés pour les douze petites cellules extérieures qui les entourent.

5. Réseau de radiocommunication avec cellules de réseau selon la revendication 1, caractérisé en ce que dans le cas d'une ou plusieurs couronnes extérieures, à au moins deux petites cellules voisines est attribué le même groupe de fréquences.

6. Réseau de radiocommunication avec cellules de réseau selon la revendication 5, caractérisé en ce que dans le cas d'au moins deux couronnes extérieures, à au moins deux petites cellules qui se correspondent, dans chaque couronne extérieure, c'est-à-dire aux petites cellules situées aux angles et entre les angles, sont affectés les mêmes groupes de fréquences.

7. Réseau de radiocommunication formé de cellules de réseau, selon la revendication 3, formant une configuration en nid d'abeilles, caractérisé en ce que les quatre groupes de fréquences des petites cellules entourant la petite cellule centrale sont intervertis d'une cellule de réseau à l'autre de telle sorte qu'aux limites de cellules de réseau, seules de petites cellules à groupes de fréquences différents sont adjacentes.

8. Réseau de radiocommunication formé de cellules de réseau selon les revendications 3 ou 4, formant une configuration en nid d'abeilles, caractérisé en ce que les groupes de fréquences d'une cellule de réseau forment un surgroupe de fréquences, et en ce que quatre surgroupes de fréquences différents (I, II, III, IV) sont prévus et sont répartis sur l'ensemble du réseau de radiocommunication de telle sorte que des cellules de réseau d'un même surgroupe de fréquences ne sont pas adjacentes entre elles.

9. Réseau de radiocommunication formé de cellules de réseau selon la revendication 8, caractérisé en ce que les quatre surgroupes de fréquences différents (I, II, III, IV) sont répartis uniformément sur les cellules de réseau, symétriquement autour de leurs centres.

10. Réseau de radiocommunication selon les revendications 8 ou 9, caractérisé en ce que par interversion des groupes de fréquences, parmi les petites cellules situées au bord de cellules de réseau à même surgroupe de fréquences, celles qui sont opposées entre elles n'ont aucun groupe de fréquences en commun.

11. Réseau de radiocommunication formé de cellules de réseau selon les revendications 3 ou 4, formant une configuration en nid d'abeilles, caractérisé en ce que les groupes de fréquences d'une cellule de réseau forment un surgroupe de fréquences, en ce que sept surgroupes de fréquences différents (I, II, III, IV, V, VI, VII) sont prévus, et en ce qu'ils sont répartis de manière en elle-même connue sur les cellules de réseau.

FIG. 1

FIG. 2

$R - \sqrt{3} R$　　　$3R$　　　E 2

E 1

P

B

D + R

M

FIG. 3

FIG. 4

FIG. 5

FIG. 6

FIG. 7

FIG. 8

FIG. 9